# EUROPEAN PATENT APPLICATION

(11) **EP 3 587 459 A1**
(43) Date of publication of application: **01.01.2020**
(21) Application number: 19000292.3
(22) Date of filing: 15.06.2019
(51) Int. Cl.: C08F 212/08, C08F 220/14, C09D 4/00

(54) **SYNTHETIC RESIN FOR PREPARATION OF PROTECTIVE COATINGS AND PROCESS FOR PREPARATION OF COATINGS ON THE BASIS OF SUCH RESIN**

(30) Priority: 23.06.2018 SI 201800148
(71) Applicant: Helios, Tovarna Barv lakov in umetnih smol Kolicevo, d.o.o., 1230 Domzale (SI)
(72) Inventor: Ocepek, Martin, 1252 Vace (SI); Misvelj, Peter, 1231 Ljubljana-Crnuce (SI); Zabret, Jozefa, 1234 Menges (SI); Steinbücher, Miha, 1241 Karnnik (SI); Kosir, Tomaz, 1230 Domzale (SI); Venturini, Peter, 1000 Ljubljana (SI)
(74) Representative: Borstar, Dusan

(57) **Abstract**

The invention is rest on a problem, how to provide a synthetic resin, by which on the basis of each existing technology and by means of substantially similar ingredients like in commonly used processes of manufacturing of coatings an one- or two component colored or transparent coatings could be obtain, the viscosity of which should not exceed 20 Pas, and which should, in the absence of any essential releasing of mercaptan smell, excel in the drying and hardening time of the applied coating, which should be between 2 and 200 min, its pot life (i.e. consistency of the coating after mixing the components prior to application) should be between 1 and 500 min, the final film hardness thereof, providing that the thickness of the coating film is between 20 and 100 mµ, should be between 100 and 300 Konig seconds, and the color index of a liquid transparent coating prior to application and hardening thereof should be below 100 Hazen units. Such synthetic resin for preparation of protective coatings, namely a (meth)acrylic-vinyl copolymer with controlled molecular weight, with respect to each total weight of the synthetic resin comprises 50 to 95 wt. % of (meth)acrylate and/or vinyl monomer units, 4 to 50 wt. % percent of organic solvents, 0,5 to 10 wt.% of initiating means, and 0,01 to 10 wt. % of multifunctional mercaptan. The invention further refers to a process for preparation of a synthetic resin, which is characterized by previously exposed features, as well as a protective coating on the basis of said synthetic resin, and also to process for preparation of a protective coating.

## Description

The present invention refers to a colored or transparent coating on the basis of synthetic resins, which is suitable for surface protecting of materials against corrosion, mechanical influences, chemicals and meteorological impacts, but can simultaneously also contribute in achieving each desired decorative effect. The invention also refers to a process for preparation of such coatings.

The invention is rest on a problem, how to provide a synthetic resin, by which on the basis of each existing technology and by means of substantially similar ingredients like in commonly used processes of manufacturing of coatings an one- or two component colored or transparent coatings could be obtain, the viscosity of which should not exceed 20 Pas, and which should, in the absence of any essential releasing of mercaptan smell, excel in the drying and hardening time of the applied coating, which should be between 2 and 200 min, its pot life (i.e. consistency of the coating after mixing the components prior to application) should be between 1 and 500 min, the final film hardness thereof, providing that the thickness of the coating film is between 20 and 100 µm, should be between 100 and 300 König seconds, and the color index of a liquid transparent coating prior to application and hardening thereof should be below 100 Hazen units.

Manufacturing of protective coatings and similar chemical products on the basis of polymeric solutions having medium or high content of dry matter is among others also disclosed in various patent literature, in particular in EP 0 882 750 A2, WO 2002/066527, US 5 514 755, EP 0 712 872 B1, US 3 028 367, EP 2 801 586 B1, US 2007/0043205 and WO 2017/064145 A1. Although each of these known approaches enables preparation of coatings with each desired viscosity, the coatings obtained by anyone of these processes, or by means of components obtained according to said documents, unfortunately cannot enable achieving of all parameters, which were set out by the present invention, namely the parameters like the drying time and/or the pot life i.e. the time in which the mixture can be applied and/or the hardness of a dried coating and/or a color index and/or the absence of undesired smells.

The present invention refers to a synthetic resin for preparation of protective coatings, namely a (meth)acrylic-vinyl copolymer with controlled molecular weight and its distribution, which with respect to each total weight of the synthetic resin comprises
- 50 to 95 wt. % of (meth)acrylate and/or vinyl monomer units;
- 4 to 50 wt. % percent of organic solvents;
- 0,5 to 10 wt. %percent of initiating means; and
- 0,01 to 10 wt. % of multifunctional mercaptan.

Said (meth)acrylate monomer units are selected from the group, which includes C₁ - C₂₀ alkyl acrylate, C₁ - C₂₀ alkyl (meth)acrylate, aryl acrylate as well as acrylic and (meth)acrylic acids or mixtures thereof. Said vinyl monomer groups are selected from the group, which includes vinyl aromatic monomers, unsaturated nitryls, vinyl esters, vinyl acetates, vinyl ethers, vinyl halides, unsaturated anhydrides, unsaturated di-carboxylic acids, acryl-amide and meth-acryl-amide as well as conjugated dienes or mixtures thereof. Said initiating means is an organic peroxide, which is selected from the group, which includes tert-butyl hydroperoxide, di-tert-butyl peroxide, di-tert-amyl peroxide, tert-butyl-peroxy-2-ethylhexanoate, tert-butyl perbenzoate, cumyl hydroxyperoxide, dicumyl peroxide, lauroyl peroxide, azo-bis-isobutrylonitrile, or mixtures thereof. Said multifunctional mercaptan is selected from the group, which includes pentaerythritol tetrakis (2-mercaptoacetate), trimethylol propane tris (3-mercaptopropionate), trimethylolpropane tris (2-mercaptopropionate), trimethylol propane tris(2-mercaptoacetate), pentaerythritol tetrakis(3-mercaptopropionate), pentaerythritol tetrakis thioglycolate, trimethylolpropane tris(3-mercaptopropionate), trimethylolpropane tris thioglycolate, pentaerythritol tetrakis(2-mercaptopropionate), trimethylolpropane tris(2-mercaptopropionate), ditrimethylolpropane tetrakis(3-mercaptopropionate), ditrimethylolpropane tetrakis thioglycolate, ditrimethylolpropane tetrakis(2-mercaptopropionate), dipentaerythritol hexakis(3-mercaptopropionate), dipentaerythritol hexakis thioglycolate, dipentaerythritol hexakis(2-mercaptopropionate), tris(3-mercaptopropionyloxy)ethyl isocyanurate, tris(mercaptoethyl oxy)ethyl isocyanurate, tris(2-mercaptopropionyloxy)ethyl isocyanurate, pentaerythritol tetrakis(4-mercapto butyrate), trimethylolpropane tris(4-mercapto butyrate), pentaerythritol tetrakis(3-mercapto butyrate), trimethylolpropane tris(3-mercapto butyrate), tris(3-mercaptobutyloxy)ethyl isocyanurate, tris(4-mercaptobutyloxy)ethyl isocyanurate, polycaprolactone tetra (3-mercaptopropionate), glycol di (3-mercaptopropionate), ethoxylated trimethylolpropane tri (3-mercaptopropionate), ethoxylated trimethylolpropane tri (3-mercaptopropionate), pentaerythritol tetramercapto-acetate, glycol dimercaptoacetate.

Said initiating means is a peroxide and is in preparation of said resin used for initiation of reaction. Mercaptan impacts the activity of initiating means, but it should be born in mind that easily volatile multifunctional mercaptan, like e.g. dodecyl mercaptan, usually generate undesired smells.

The present invention also includes a process for manufacturing of a synthetic resin with previously explained features, wherein during the first step
- on the one hand an organic solvent is prepared within a suitable reaction vessel in a quantity of between 4 - 50% of the weight of each expected quantity of the synthetic resin, which is then heated to temperature between 50 and 200°C; and
- on the other hand a mixture is prepared separately, which by taking into account the total weight of each expected quantity of said synthetic resin consists of 50-90 wt. % of acryl and/or vinyl monomer units, 0,01 to 10 wt. % of multifunctional mercaptan and 0,5 to 10 wt. % of initiating means;
- upon which in the second step said solvent is continuously stirred within said reaction vessel, during which said mixture of monomereic (meth)acrylate and/or vinyl units is gradually added, by which thanks to said initiating means polymerization of said monomereic (meth)acrylate and/or vinyl units is initiated, which is still intensified by means of multifunctional mercaptan;
- upon which after a pre-determined time, which is calculated from the conclusion of introduction of complete quantity of components of said mixture into said reaction vessel, and in each time after conclusion of said polymerization, such obtained synthetic resin is during continuously stirring gradually cooled to room temperature.

Said gradually adding of mixture of monomereic (meth)acrylate and/or vinyl units, multifunctional mercaptan and initiating means is performed uniformly and by gradually admixing during 2 - 10h, wherein the duration of mixing and polymerization, namely the time calculated from adding the complete quantity of mixture of (meth)acrylate and/or vinyl units, multifunctional mercaptan and initiating means up to cooling is at least 5 min.

A further object of the present invention is a protective coating, which relatively to the complete weight of the coating comprises
- 20 to 50 wt.% of the synthetic resin with previously explained features and obtained by the previously disclosed process;
- 2 to 50 wt.% of hardening means;
- 0,001 to 0,5 wt.% of catalyst;
- up to 50 wt.% of organic solvent; and
- 0,1 to 70 wt.% of additives.

Said catalyst is an organic/metallic complex, which is capable to enhance a reaction between both components of the coating, by which then hardening of the coating is accelerated.

The acid value is adjusted within the range between 0 and 150 mg KOH/g, OH value is between 30 and 220 mg KOH/g, average molecular mass number (Mw) is between 500 and 55000 g/mole, and glass transition temperature (Tg) is between - 40°C and 120°C. At least one of said additives is selected from the group, which includes fillers, UV stabilizers, coloring pigments, as well as a means for adjusting the viscosity of the coating prior to application thereof, namely for achieving a desired distribution of the coating on each surface, onto which it is applied.

The invention further proposes a process for preparation of a two-component protective coating, wherein
- the first component of the coating is prepared at room temperature by mixing of, relative to the total weight of the coating, 20 to 90 wt.% of synthetic resin, a suitable portion of completely up to 50 wt.% of organic solvent as well as each determined additives in quantity between 0,1 and 70 wt.%, whereupon such obtained first component is stored in a closed container and protected against UV-rays at temperature between - 5 and 35°C; and
- the second component is prepared independently by mixing of, relatively to total weight of the coating, a suitable portion of totally up to 50 wt.% of organic solvent and 2 to 50 wt.% of hardening means, whereupon such obtained second component is stored in a closed container and protected against UV-rays at temperature between - 5 and 35°C;
- upon which and just prior to expected application of the coating either by means of spraying or by means of a brush or a roller, said first and second component are gradually and uniformly admixed to each other within a suitable container and are then suitably mixed, upon which, by taking into consideration the pot life and hardening time of such mixture, such obtained coating is applied on a suitably prepared surface, on which after expiring the hardening time each desired protective and/or aesthetic coating of a pre-determined thickness is formed.

### Example 1

Preparation of a protective coating on the basis of polymer solution with a medium content of solid substance has been performed in a manner which will be now disclosed. A glass reaction vessel with capacity 51 and equipped with a condenser and a pump for supplying of mixture of monomer and initiating means. Initially, said reaction vessel was charged by 1154,0 g of butyl-acetate. Upon that, the vessel was heated to boiling temperature of said solvent, namely to 126 - 128°C. Heating rate was adjusted to maintain solvent boiling reflux. Meanwhile the monomer mixture and initiator were weighted and mixed, namely 1421,8 g of methyl-methacrylate, 304,7 g of butyl acrylate, 283,9 g of hydroxyl-ethyl acrylate, 51,3 of acrylic acid, 5,2 g of ethoxylated trimethylol-propane tri (3-mercaptopropionate). Also 28,5 g of t-butyl peroxy-benzoate was added to the mixture which was added into said vessel over a period of 4h. After said adding, a mixture of 6,0 g of t-butyl peroxy-benzoate diluted by 725,3 g butyl-acetate was added during a period of 20 min. The temperature of such obtained polymer solution was maintained for 3 h, which was then followed by g cooling to room temperature. Solid content of such obtained polymer solution was 50,6 wt.%, viscosity at 23°C was 6,230 mPas, acid number was 21,2 mgKOH/g, OH number was 63,9 mgKOH/g, and color index was 45 Hazen units.

### Example 2

Preparation of a protective coating on the basis of polymer solution with a high content of solid substance has been performed in a following manner: A glass reaction vessel with capacity 51 and equipped with a condenser and a pump for supplying of mixture of monomer and initiating means. Initially, said vessel has been charged by 842,1 g of butyl-acetate. Upon that, said vessel has been heated up to the boiling temperature of said solvent, namely to 126 - 128°C. Heating rate was adjusted to maintain solvent boiling reflux. In the mean time, the monomer mixture and initiator were weighted and mixed, namely 1419,5 g of styrene, 842,1 g of butyl acrylate, 590,0 g hydroxypropyl acrylate, 59,3 g of acrylic acid, 6,7 g of ethoxylated trimethylolpropane tri (3-mercaptopropionate) and 60,2 g of t-butyl peroxybenzoate. Said admixing has been performed during 4h. Upon that, during a period of 20 min, a mixture of 6,0 g t-butyl peroxybenzoate, diluted with 120,2 g of butylacetate was added into said reaction vessel. Temperature within the reaction vessel has been maintained for further 3 h, which was then followed by cooing to room temperature. Solid content in such obtained polymer solution was 75,1 wt.%, viscosity at 23°C was 15,820 mPas, acid number was 17,3 mgKOH/g, OH number was 89,3 mgKOH/g, and color index was 53 Hazen units.

## Claims

1. Synthetic resin for preparation of protective coatings, namely a (meth)acrylic-vinyl copolymer with controlled molecular weight, comprising with respect to each total weight of the synthetic resin
- 50 to 95 wt. % of (meth)acrylate and/or vinyl monomer units;
- 4 to 50 wt. % percent of organic solvents;
- 0,5 to 10 wt. %percent of initiating means; and
- 0,01 to 10 wt. % of multifunctional mercaptan.

2. Synthetic resin according to Claim 1, wherein said acrylate monomer units are selected from the group, which includes C₁ - C₂₀ alkyl acrylate, C₁ - C₂₀ alkyl (meth)acrylate, aryl acrylate as well as acrylic and (meth)acrylic acids or mixtures thereof.

3. Synthetic resin according to Claim 1 or 2, wherein said vinyl monomer groups are selected from the group, which includes vinyl aromatic monomers, unsaturated nitryles, vinyl esters, vinyl acetates, vinyl ethers, vinyl halides, unsaturated anhydrides, unsaturated dicarboxylic acids, acrylamide and methacrylamide as well as conjugated dienes or mixtures thereof.

4. Synthetic resin according to anyone of Claims 1 - 3, wherein said initiating means is an organic peroxide, which is selected from the group, which includes tert-butyl hydroperoxide, di-tert-butyl peroxide, di-tert-amyl peroxide, tert-butyl-peroxy-2-ethylhexanoate, tert-butyl perbenzoate, cumyl hydroxyperoxide, dicumyl peroxide, lauroyl peroxide, azo-bis-isobutrylonitrile, or mixtures thereof.

5. Synthetic resin according to anyone of Claims 1 - 4, wherein said multifunctional mercaptan is selected from the group, which includes pentaerythritol tetrakis (2-mercaptoacetate), trimethylol propane tris (3-mercaptopropionate), trimethylolpropane tris (2-mercaptopropionate), trimethylol propane tris(2-mercaptoacetate), pentaerythritol tetrakis(3-mercaptopropionate), pentaerythritol tetrakis thioglycolate, trimethylolpropane tris(3-mercaptopropionate), trimethylolpropane tris thioglycolate, pentaerythritol tetrakis(2-mercaptopropionate), trimethylolpropane tris(2-mercaptopropionate), ditrimethylolpropane tetrakis(3-mercaptopropionate), ditrimethylolpropane tetrakis thioglycolate, ditrimethylolpropane tetrakis(2-mercaptopropionate), dipentaerythritol hexakis(3-mercaptopropionate), dipentaerythritol hexakis thioglycolate, dipentaerythritol hexakis(2-mercaptopropionate), tris(3-mercaptopropionyloxy)ethyl isocyanurate, tris(mercaptoethyl oxy)ethyl isocyanurate, tris(2-mercaptopropionyloxy)ethyl isocyanurate, pentaerythritol tetrakis(4-mercapto butyrate), trimethylolpropane tris(4-mercapto butyrate), pentaerythritol tetrakis(3-mercapto butyrate), trimethylolpropane tris(3-mercapto butyrate), tris(3-mercaptobutyloxy)ethyl isocyanurate, tris(4-mercaptobutyloxy)ethyl isocyanurate, polycaprolactone tetra (3-mercaptopropionate), glycol di (3-mercaptopropionate), ethoxylated trimethylolpropane tri (3-mercaptopropionate), ethoxylated trimethylolpropane tri (3-mercaptopropionate), pentaerythritol tetramercapto-acetate, glycol dimercaptoacetate.

6. Process for manufacturing of a synthetic resin according to anyone of Claims 1 - 5, wherein during the first step
- on the one hand an organic solvent is prepared within a suitable reaction vessel in a quantity of between 4 - 50% of the weight of each expected quantity of the synthetic resin, which is then heated to temperature between 50 and 200°C; and
- on the other hand a mixture is prepared separately, which by taking into account the total weight of each expected quantity of said synthetic resin consists of 50 - 90 wt. % of acryl and/or vinyl monomer units, 0,01 to 10 wt. % of multifunctional mercaptan and 0,5 to 10 wt. % of initiating means;
- upon which in the second step said solvent is continuously stirred within said reaction vessel, during which said mixture of monomereic (meth)acrylate and/or vinyl units is gradually added, by which thanks to said initiating means polymerization of said monomereic (meth)acrylate and/or vinyl units is initiated, which is still intensified by means of multifunctional mercaptan;
- upon which after a pre-determined time, which is calculated from the conclusion of introduction of complete quantity of components of said mixture into said reaction vessel, and in each time after conclusion of said polymerization, such obtained synthetic resin is during continuously stirring gradually cooled to room temperature.

7. Process according to Claim 6, wherein said gradually adding of mixture of monomereic (meth)acrylate and/or vinyl units, multifunctional mercaptan and initiating means is performed uniformly and by gradually admixing during 2 - 10h, wherein the duration of mixing and polymerization, namely the time calculated from adding the complete quantity of mixture of (meth)acrylate and/or vinyl units, multifunctional mercaptan and initiating means up to cooling is at least 5 min.

8. Protective coating, comprising relatively to the complete weight of the coating
- 20 to 50 wt.% of the synthetic resin according to anyone of Claims 1 - 5 and obtained by the process according to Claim 6;
- 2 to 50 wt.% of hardening means;
- 0,001 to 0,5 wt.% of catalyst;
- up to 50 wt.% of organic solvent; and
- 0,1 to 70 wt.% of additives.

9. Protective coating according to Claim 8, **characterized in that** the acid value is adjusted within the range between 0 and 150 mg KOH/g, OH value is between 30 and 220 mg KOH/g, average molecular mass number (Mw) is between 500 and 55000 g/mole, and glass transition temperature (Tg) is between - 40°C and 120°C.

10. Protective coating according to Claim 8 or 9, **characterized in that** at least one of said additives is selected from the group, which includes fillers, UV stabilizers, coloring pigments, as well as a means for adjusting the viscosity of the coating prior to application thereof, namely for achieving a correct distribution of the coating on each surface, onto which the coating is to be applied.

11. Process for preparation of a two-component protective coating
- wherein the first component of the coating is prepared at room temperature by mixing of, relative to the total weight of the coating, 20to 90 wt.% of synthetic resin, a suitable portion of completely up to 50 wt.% of organic solvent as well as each determined additives in quantity between 0,1 and 70 wt.%, whereupon such obtained first component is stored in a closed container and protected against UV-rays at temperature between - 5 and 35°C; and
- wherein the second component is prepared independently by mixing of, relatively to total weight of the coating, a suitable portion of totally up to 50 wt.% of organic solvent and 2 to 50 wt.% of hardening means, whereupon such obtained second component is stored in a closed container and protected against UV-rays at temperature between - 5 and 35°C;
- upon which, just prior to expected application of the coating either by means of spraying or by means of a brush or a roller, said first and second component are gradually and uniformly admixed to each other within a suitable container and are then suitably mixed, upon which, by taking into consideration the pot life and hardening time of such mixture, such obtained coating is applied on a suitably prepared surface, on which after expiring the hardening time each desired protective and/or aesthetic coating of a pre-determined thickness is formed.
